# EUROPÄISCHE PATENTANMELDUNG

(11) **EP 0 953 671 A1**
(43) Veröffentlichungstag der Anmeldung: **03.11.1999**
(21) Anmeldenummer: 98810390.9
(22) Anmeldetag: 30.04.1998
(51) Int. Cl.: D06M 11/36, A47L 13/16, D06M 11/38

(54) **Verfahren zur Veredelung einer Reinigungsfaser und zur Herstellung eines Reinigungstextils, sowie ein Reinigungstextil**

(71) Anmelder: Sanamundi Aktiengesellschaft, 9496 Balzers (LI)
(72) Erfinder: Foser, Manfred, 9496 Balzern (LI)
(74) Vertreter: Hasler, Erich, Dr.

(57) **Zusammenfassung**

Bei einem Verfahren zur Veredelung einer Reinigungsfaser und zur Herstellung eines Reinigungstextils wird das Fasermaterial mittels Chemikalien, welche das Fasermaterial anzugreifen vermögen, behandelt. Durch die Behandlung, die vorzugsweise mittels einer wässerigen alkalischen Lösung erfolgt, kann die mechanische Reinnigungswirkung von Mikrofasern verbessert werden.

## Beschreibung

Die vorliegende Erfindung betrifft ein Verfahren zur Veredelung einem Reinigungsfaser und zur Herstellung eines Reinigungstextils, sowie ein Reinigungstextil.

Die DE-A-195 21 780 bezieht sich auf ein Wischtuch zur Entfernung partikulärer Verunreinigungen im Submikronbereich. Zur Verbesserung des Wirkungsgrades des Wischtuchs wird dieses einer Oberflächenbehandlung zugeführt, welche die Faser oder Filamente quer zu deren Ausdehnung mit einer Vielzahl von Kerben versieht, welche in ihren Abmessungen der sphärischen Ausdehnung der zu entfernenden Partikel entsprechen. Dieses Wischtuch findet Verwendung in Reinräumen zur Entfernung von Stäuben von glatten Oberflächen. Für die Verwendung als Reinigungstuch im Haushalt erscheint das Wischtuch jedoch als ungeeignet, da das Reinigungsproblem im Haushalt grundsätzlich ein anderes ist.

Es ist Aufgabe der vorliegenden Erfindung eine Reinigungsfaser und ein Reinigungstextil mit verbessertem Wirkungsgrad zur Verfügung zu stellen. Es soll insbesondere ein Reinigungstextil bereitgestellt werden, welches sich besonders gut eignet für die mechanische Reinigung vor, glatten und strukturierten Oberflächen und eine im Vergleich zu bekannten Reinigungstextilien verbesserte mechanische Reinigungswirkung besitzt.

Erfindungsgemäss wird dies erreicht, indem dass zur Verbesserung der Reinigungskraft die Fasern mit einer oder mehreren Chemikalien, welche das Fasermaterial anzugreifen vermögen, kontaktiert werden. Die Behandlung mit der wenigstens einen Chemikalie hat zum Ziel, die mechanische Reinigungswirkung der Faseroberflächen zu verbessern. Es hat sich gezeigt, dass durch die Behandlung der Fasern oder Filamente mit Chemikalien, z.B. mit alkalischen Lösungen, die das Fasermaterial zu attackieren, d.h. teilweise an- oder aufzulösen vermögen, die Oberflächen der Fasern wenigstens teilweise aufgerauht werden können und dass dadurch die mechanische Reinigungswirkung der Fasern überraschenderweise wesentlich verbessert wird. Es wird vermutet, dass die verbesserte Reinigungswirkung mit einer Vergrösserung der Faseroberflächen korreliert und/oder die Affinität der Fasern für Staubpartikel erhöht wird. Durch die Vergrösserung der Faseroberflächen werden auch die Angriffsflächen vergrössert. Vorteilhaft werden die Oberflächen der Fasern mit einer wässerigen alkalischen Lösung behandelt. Überraschenderweise kann mittels einer alkalischen Behandlung die Schabewirkung der Fasern verbessert werden. Von Bedeutung ist auch, dass durch eine alkalische Behandlung die Kapillarwirkung der Mikrofasern verbessert werden kann.

Vorzugsweise wird der Grad der Aufrauhung anhand des durch die Behandlung bewirkten gewichtsmässigen Materialschwunds gemessen. Die Bestimmung des durch die Behandlung eingetretenen gewichtsmässigen Verlustes erlaubt es, mit relativ einfachen Mitteln den Prozess zu kontrollieren. Bevorzugt wird durch eine Anlaugung mit einer wässerigen, alkalischen Lösung ein gewichtsmässiger Materialschwund von wenigstens 5%, vorzugsweise von wenigstens 10%, und ganz besonders bevorzugt von wenigstens 20 Gewichtsprozenten bewirkt. In der Praxis hat sich gezeigt, dass bereits durch eine alkalische Behandlung, welche einen 5%-igen Gewichtsverlust hervorruft, der mechanische Reinigungseffekt der Fasern schon deutlich verbessert werden kann.

Vorzugsweise wird das Anlaugeverfahren auf Polyamid- oder Polyesterfasern angewendet. Bevorzugt sind die Fasern Mikrofasern einer Feinheit von maximal 20 dtex und vorzugsweise von maximal 10 dtex.

Vorteilhaft wird die gewebte oder gewirkte Ware alkalisch angelaugt. Die Ware kann dabei in Textilbahnen vorliegen, die zwecks Aufrauhung durch ein wässeriges, alkalisches Bad transportiert wird. Besonders geeignet ist das vorgeschlagene Verfahren zur Aufrauhung von Mikrofasern, bei welchen aufgrund ihrer geringen Zugstärke und Feinheit eine mechanische Oberflächenbearbeitung nicht möglich ist.

Gegenstand der vorliegenden Erfindung ist auch ein Reinigungstextil erhältlich nach dem oben beschriebenen Verfahren und mit einem Besatz mit Polyester-Mikrofaserschlingen einer Feinheit von maximal ungefähr 10 dtex, vorzugsweise maximal 6 dtex und ganz besonders bevorzugt von maximal 1 dtex, und einer Mindestschlingenlänge von wenigstens 4 mm, vorzugsweise mehr als 6 mm und ganz besonders bevorzugt von mehr als 8 mm; und einem in Grösse ungefähr dem ersten Reinigungstextil entsprechenden zweiten Textil, welches an der dem Mikrofaserschlingenbesatz gegenüberliegenden Seite des ersten Reinigungstextils angeordnet ist, mit einem nach aussen orientierten Besatz mit Fasern einer Wasserabsorptionsfähigkeit von wenigstens 600%, vorzugsweise mehr als 800% und ganz besonders bevorzugt von mehr als 1000% des Eigengewichts.

Nachfolgend werden Ausführungsbeispiele der Erfindung unter Bezugnahme auf die Figuren beschrieben. Es zeigt:
- Fig. 1: in perspektivischer Ansicht ein Reinigungstuch bestehend aus einem ersten und einem zweiten Textil, wobei das erste Textil nach dem erfindungsgemässen Verfahren hergestellt ist und eine verbesserte mechanische Reinigungswirkung besitzt, und das zweite Textil ein solches mit einer hohen Wasserabsorptionsfähigkeit ist;
- Fig. 2: eine Draufsicht auf die Reinigungsoberfläche des ersten Textils;
- Fig. 3: im Schnitt eine Teilansicht durch das Reinigungstuchs von Fig. 1; und
- Fig. 4: eine Draufsicht auf die Reinigungsoberfläche des zweiten Textils.

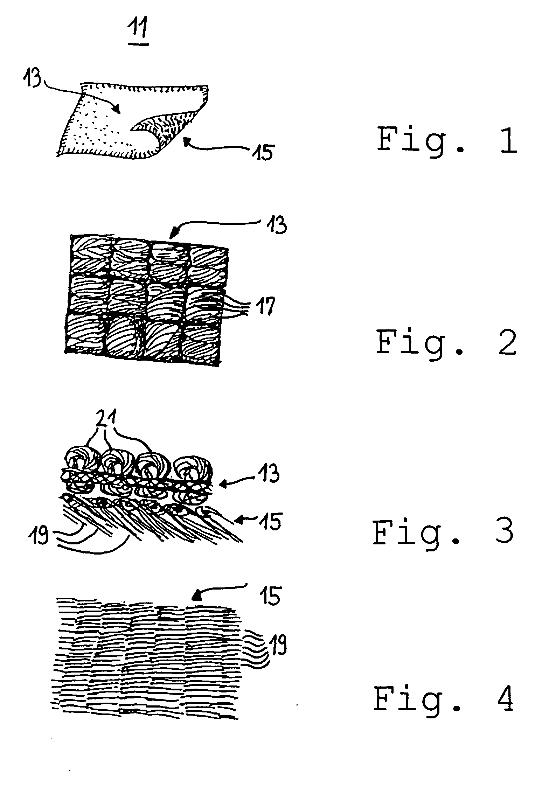

Das in den Figuren 1 bis 4 gezeigte Ausführungsbeispiel eines Reinigungstextil 11 besteht aus zwei unterschiedlichen textilen Geweben 13,15, einem ersten Textil 13 mit einem Besatz von ersten Mikrofasern 17 und einem zweitem Textil 15 mit einem Besatz von zweiten Fasern 19. Die ersten Fasern 17 sind vorzugsweise Polyester-Mikrofasern und die zweiten Fasern 19 vorzugsweise Viskosefasern. Die Polyesterfasern 17 definieren eine erste Reinigungsoberfläche mit verbesserter mechanischer Reinigungskraft und die Viskosefasern 19 eine zweite Reinigungsoberfläche mit einer hohen Wasserabsorptionsfähigkeit. Die beiden Textilien 13,15 sind an ihrem Umfangsrand durch einen nicht näher dargestellten Saum miteinander verbunden. Die beiden Reinigungsoberflächen sind dabei nach aussen orientiert, sodass verschmutzte Oberflächen je nach Bedarf mit der einen oder der anderen Reinigungsoberfläche gereinigt werden können.

Gemäss dem gezeigten Ausführungsbeispiel (Fig. 1 bis 4) sind die ersten Fasern 17 in Form von Schlingen 21 einer Länge von wenigstens 4 mm und vorzugsweise mehr als 6 mm, und ganz besonders bevorzugt einer Länge zwischen 8 mm bis 12 mm entsprechend einer Fadenlänge der Schlinge von ungefähr 16 bis ca. 24 mm an einer Seite des ersten Textils 13 angeordnet (Fig. 3). Die angegebene Länge der Mikrofaserschlingen bezieht sich dabei auf deren effektive Länge der Schlinge bis zum textilen Grundgewebe, wo die Schlinge verankert ist. Zur Bestimmung der Schlingenlänge müssen die normalerweise gekräuselten oder zusammengezogenen Schlingen gestreckt werden. Die Schlingen 21 sind aus einem ungezwirnten Filamentgarn der entsprechenden Fasern 17 gebildet. Das Filamentgarn besteht vorzugsweise aus 100 bis 200 Fasern. Die Feinheit der Fasern beträgt maximal 10 Dezitex, vorzugsweise maximal 6 dtex, und ganz besonders bevorzugt maximal 1 dtex. Ein bevorzugtes Reinigungstextil besitzt Fasern einer Feinheit zwischen 0.1 und 1 dtex. Die Schlingen 21 sind am Textilgrundgewebe angeordnet und an diesem mittels einer in den Figuren nicht ersichtlichen, den Wasseraustausch nicht behindernden, durchlässigen Kunststoffbeschichtung, z.B. einem thermoplastischen Kunststoff, fixiert. Die Verankerung der Schlingen am Textilgrundgewebe kann anstatt mit einer Kunststoffbeschichtung beispielsweise auch durch Verschweissen mit thermoplastischen Fäden erfolgen.

Die Fasern 19 des zweiten Textils sind von einer Seite des Textils 15 abstehende Fransen oder Polfasern (Fig. 3 und 4). Die Polfasern besitzen vorteilhaft eine Mindestlänge von 4mm und vorzugsweise eine Länge von 4 bis ca. 12 mm. Obwohl grundsätzlich Baumwollfasern verwendet werden können, kommen vorzugsweise auf dem Markt erhältliche Viskosefasern zum Einsatz. Die Feinheit der angebotenen Viskosefasern bewegt sich üblicherweise zwischen 10 und 30 dtex.

Die Herstellung eines Reinigungstextils mit Mikrofasern verbesserter Reinigungswirkung geschieht folgendermassen: Zunächst werden die Mikrofasern oder Mikrofilamente aus Polyamid oder Polyester in den gewünschten Feinheiten zu einem gewebten oder gewirkten Textil verarbeitet. Üblicherweise werden die Mikrofasern dabei entweder als Polfasern oder als Schlingen an einem textilen Grundgewebe angeordnet. Das gewebte oder gewirkte Textil mit den Reinigungsfasern wird in Bahnen einer bestimmten Breite hergestellt. Die fertigen Textilbahnen werden sodann ausgerüstet, d.h. veredelt. Darunter sind Verfahrensschritte wie beispielsweise Einfärben, Waschen, Imprägnieren usw. zu verstehen.

Erfindungsgemäss kommt nun zu den bekannten Schritten ein weiterer Verfahrensschritt dazu, nämlich das chemische Aufrauhen der mit dem textilen Grundgewebe verbundenen Fasern. Zu diesem Zweck wird die Textilbahn mit einer wässerigen alkalischen Lösung, z.B. Natron- oder Kalilauge einer gewichtsmässigen Konzentration bis zu 30%, vorzugsweise zwischen 5 und 30%, kontaktiert. Dies geschieht beispielsweise, indem die Textilbahn durch ein entsprechendes alkalisches Bad geleitet wird. Die optimale Reaktionszeit kann empirisch bestimmt werden, beispielsweise aufgrund des festgestellten Materialschwundes. Die Reaktionszeit hängt ab vom Material und von der Feinheit der eingesetzten Fasern, der Konzentration der alkalischen Lösung und dem Grad der gewünschten Aufrauhung.

Nach einer bestimmten Zeit, nachdem die Faseroberflächen im gewünschten Ausmass angegriffen worden sind, wird die Textilbahn aus dem Alkalibad genommen oder dasselbe neutralisiert, und die restliche Lauge oder Salze werden in einem oder mehreren Waschvorgängen ausgewaschen.

Die Schlingen werden sodann bevorzugt mittels einer durchlässigen Kunststoffbeschichtung mit dem textilen Grundgewebe verbunden. Damit wird eine Verankerung der Schlingen am Grundgewebe erreicht. Die Verankerung verhindert, dass das Reinigungstextil beim Kochen eingeht oder sich verzieht.

Das Einfärben der Textilien kann vor oder nach der alkalischen Behandlung der Fasern erfolgen.

Aus der Textilbahn werden dann Textilstücke der gewünschten Grösse ausgeschnitten und als Reinigungstextile konfektioniert. Die Reinigungstextile können als Reinigungshandschuhe oder Reinigungstücher für Haushalt eingesetzt werden.

Das alkalisch behandelte Textilstück 13 mit verbesserter mechanischer Reinigungskraft wird sodann bevorzugt mit einem saugstarken, zweiten Textil 15 kombiniert, indem die beiden Textilien zusammengenäht oder -geschweisst werden, wobei auf eine ausreichende Wasserdurchlässigkeit zwischen den beiden Textilien zu achten ist. Auf diese Weise erhält man ein besonders vorteilhaftes Reinigungstextil mit guter mechanischer Reinigungswirkung. Die verbesserte Reinigungswirkung ist darauf zurückzuführen, dass das saugstarke Textil als Wasserspeicher dient und in der Lage ist, beim Putzen Wasser an das Mikrofasertuch abzugeben oder auch aufzunehmen und dass die alkalisch behandelten Fasern insgesamt eine verbesserte mechanische Reinigungswirkung haben. Bei der mechanischen Reinigung von verschmutzten Oberflächen ist die richtige aber nicht zu exzessive Benetzung der verschmutzten Oberflächen nämlich besonders wichtig. In diesem Zusammenhang ist auch die durch alkalische Behandlung erreichte Verbesserung der Kapillarwirkung der Mikrofasern ebenfalls von Bedeutung. Ein weiterer Vorteil des beschriebenen Reinigungstuchs ist, dass durch Nachputzen mit der saugstarken Seite des Reinigungstuchs auf der Oberfläche verbleibende Wasserresten entfernt werden können, sodass keine Striemen zurückbleiben.

## Patentansprüche

1. Verfahren zur Verstärkung der Reinigungswirkung einer Reinigungsfaser, dadurch gekennzeichnet, dass zur Verbesserung der Reinigungskraft die Fasern mit einer oder mehreren Chemikalien, welche das Fasermaterial anzugreifen vermögen, kontaktiert werden.

2. Verfahren nach Anspruch 1, dadurch gekennzeichnet, dass die Oberflächen der Fasern mit einer wässerigen alkalischen Lösung behandelt werden.

3. Verfahren nach Anspruch 1 oder 2, dadurch gekennzeichnet, dass die Fasern durch die Behandlung mit mit der wässerigen alkalischen Lösung aufgerauht werden.

4. Verfahren nach Anspruch 2 oder 3, dadurch gekennzeichnet, dass der Grad der alkalischen Aufrauhung anhand des gewichtsmässigen Materialschwunds gemessen wird.

5. Verfahren nach einem der Ansprüche 1 bis 4, dadurch gekennzeichnet, dass als Reinigungsfaser eine Polyester und/oder eine Polyamidfaser eingesetzt wird.

6. Verfahren nach einem der Ansprüche 1 bis 5, dadurch gekennzeichnet, dass Fasern mit einer Feinheit von maximal 20 dtex und vorzugsweise von maximal 10 dtex eingesetzt werden.

7. Verfahren nach einem der Ansprüche 2 bis 6, dadurch gekennzeichnet, dass durch die alkalische Anlaugung ein gewichtsmässiger Materialschwund von wenigstens 5%, vorzugsweise von wenigstens 10%, und ganz besonders bevorzugt von wenigstens 20% erzeugt wird.

8. Verfahren zur Herstellung eines Reinigungstextils, bei welchem Verfahren eine Kunststoffaser, vorzugsweise eine Mikrofaser, zu einer gewebten oder gewirkten Ware verarbeitet wird, dadurch gekennzeichnet, dass die gewebte oder gewirkte Ware mittels wenigstens einer das Fasermaterial attackierenden Chemikalie, z.B. einer Lauge, behandelt wird.

9. Verfahren nach Anspruch 8, dadurch gekennzeichnet, dass die gewebte oder gewirkte Ware alkalisch behandelt wird, wobei andere Veredelungsschritt, z.B. Einfärbung, vor oder nach der alkalischen Behandlung erfolgen können.

10. Verfahren nach Anspruch 8 oder 9, dadurch gekennzeichnet, dass durch die chemische Behandlung ein gewichtsmässiger Schwund der gewebten oder gewirkten Ware von wenigstens 5%, vorzugsweise von wenigstens 10%, und ganz besonders bevorzugt von wenigstens 20% erzeugt wird.

11. Reinigungstextil (13) erhältlich dadurch, dass eine gewebte oder gewirkte Ware mit Kunststoffasern, insbesondere mit Mikrofasern (17) , alkalisch angelaugt wird.

12. Reinigungstextil nach Anspruch 10, dadurch gekennzeichnet, dass durch die alkalische Anlaugung ein gewichtsmässiger Schwund der gewebten oder gewirkten Ware von wenigstens 5%, vorzugsweise von wenigstens 10%, und ganz besonders bevorzugt von wenigstens 20% erzeugt wird.

13. Reinigungstuch (11) mit einem ersten Reinigungstextil (13) nach Anspruch 10 oder 11 mit einem Besatz mit Polyester-Mikrofaserschlingen (21) einer Feinheit von maximal ungefähr 10 dtex, vorzugsweise maximal 6 dtex und ganz besonders bevorzugt von maximal 1 dtex, und einer Mindestschlingenlänge von wenigstens 4 mm, vorzugsweise mehr als 6 mm und ganz besonders bevorzugt von mehr als 8 mm; und einem in Grösse ungefähr dem ersten Reinigungstextil entsprechenden zweiten Textil (15), welches an der dem Besatz gegenüberliegenden Seite des ersten Reinigungstextils (13) angeordnet ist, mit einem Besatz mit Fasern einer Wasserabsorptionsfähigkeit von wenigstens 600%, vorzugsweise mehr als 800% und ganz besonders bevorzugt von mehr als 1000% des Eigengewichts.
